# EUROPÄISCHE PATENTSCHRIFT

(11) **EP 2 227 629 B1**
(45) Veröffentlichungstag und Bekanntmachung des Hinweises auf die Patenterteilung: **29.02.2012**
(21) Anmeldenummer: 08863553.7
(22) Anmeldetag: 15.12.2008
(51) Int. Cl.: F02K 9/52, F02K 9/62

(54) **BRENNKAMMERVORRICHTUNG**
COMBUSTION CHAMBER DEVICE
DISPOSITIF DE CHAMBRE DE COMBUSTION

(30) Priorität: 21.12.2007 DE 102007063539
(43) Veröffentlichungstag der Anmeldung: 15.09.2010
(73) Patentinhaber: Deutsches Zentrum für Luft- und Raumfahrt e. V., 51147 Köln (DE)
(72) Erfinder: LUX, Johannes, 41812 Erkelenz (DE); SUSLOV, Dmitry, 74219 Möckmühl (DE); HAIDN, Oskar, 74676 Niedernhall (DE)
(74) Vertreter: Hoeger, Stellrecht & Partner Patentanwälte
(86) Internationale Anmeldenummer: PCT/EP2008/067572
(87) Internationale Veröffentlichungsnummer: WO 2009/080595

(56) Entgegenhaltungen:
- WO-A1-97/08442
- DE-A1-102006 029 586
- US-A- 3 446 023
- US-B1- 6 672 756
- LUX J ET AL: "On porous liquid propellant rocket engine injectors" AEROSPACE SCIENCE AND TECHNOLOGY, ELSEVIER MASSON, FR, Bd. 12, Nr. 6, 1. September 2008 (2008-09-01), Seiten 469-477, XP023784554 ISSN: 1270-9638 [gefunden am 2007-12-14]

## Beschreibung

Die vorliegende Erfindung betrifft eine Brennkammervorrichtung, umfassend eine Brennkammer, eine erste Injektoreinrichtung zur Einbringung eines ersten Fluids in die Brennkammer und eine zweite Injektoreinrichtung zur Einbringung eines zweiten Fluids in die Brennkammer.

Aus der DE 10 2004 029 029 A1 ist ein Einspritzkopf zur Zuführung von eine Verbrennung in einem Brennraum bewirkenden Medien bekannt. Der Einspritzkopf ist aus mindestens zwei koaxial zu einer Achse ineinandergreifenden Segmenten aufgebaut. Die mindestens zwei Segmente weisen mindestens einen Verteilkanal mit einem zugeordneten langgezogenen Auslassbereich für einen Strom eines ersten Mediums und mindestens einen Verteilkanal mit einem zugeordneten langgezogenen Auslassbereich für einen Strom eines zweiten Mediums begrenzende Wandbereiche auf und der langgezogene Auslassbereich für das erste Medium und der langgezogene Auslassbereich für das zweite Medium sind koaxial zueinander und mindestens in einem Winkelbereich von 360° um die Achse umlaufend ausgebildet.

Aus der DE 693 08 518 T1 (EP 0 604 279 M1) ist ein Nahverbrennungsgenerator bekannt, der Versorgungsvorrichtungen für einen ersten Flüssigtreibstoff und Versorgungsvorrichtungen für einen zweiten Flüssigtreibstoff, ein poröses Hauptteil, über welches eine Durchflussmenge des ersten Flüssigtreibstoffs in eine Verbrennungskammer eingespritzt wird, die durch eine der Flächen des porösen Stücks begrenzt wird, und Vorrichtungen für das Einspritzen einer Menge des zweiten Treibstoffs in dem porösen Teil oder in unmittelbarer Nähe zur Fläche des porösen Teils, die die Verbrennungskammer begrenzt, umfasst. Eine Mischung aus erstem und zweitem Treibstoff entsteht in dem porösen Teil oder in unmittelbarer Nähe zu der besagten Fläche des porösen Teils, die die Verbrennungskammer begrenzt. Der poröse Hauptteil ist ringförmig und die besagten Vorrichtungen zum Einspritzen einer Menge des zweiten Treibstoffs sind so geformt, dass die Einspritzung des zweiten Treibstoffs im Wesentlichen radial erfolgt. Es ist wenigstens eine Kalibrierausrüstung für das poröse Hauptteil vorhanden, welche Kalibrieröffnungen zur Sicherstellung der Modulation der Einspritzgeschwindigkeit des ersten Flüssigtreibstoffs in die Verbrennungskammer umfasst, wobei wenigstens einer der durch die Dimension der Kalibrieröffnungen gebildeten Parameter, nämlich Distanz zwischen den benachbarten Kalibrieröffnungen und Zahl der Kalibrieröffnungen pro Einheitsoberfläche, in Abhängigkeit von der axialen Position der Kalibrieröffnungen in der Kalibrierausrüstung veränderbar ist.

Aus der DE 1 932 881 ist eine Brennkammer für Gasturbinentriebwerke bekannt, welche mit Einrichtungen zur Zuführung und Aufbereitung des Kraftstoffs ausgerüstet ist. Die stromaufwärtige Flammrohrwand der Brennkammer von einem oder mehreren strömungsdurchlässigen Elementen ist mit diesen stromaufwärts zugeordnet Kraftstoffeinspritzeinrichtungen durchsetzt.

Aus der GB 1,046,909 ist eine Brennkammer bekannt, welche eine Anordnung von porösen Injektorelementen umfasst.

Aus der US 2005/0241294 A1 ist ein Injektorsystem für einen Raketenmotor bekannt, welches einen Raum mit mindestens einem porösen Element aufweist.

Aus der US 6,672,756 B1 ist ein Fluidmischer mit einem porösen Kern bekannt.

Aus der US 3,605,408 ist ein Raketenmotor bekannt, welcher eine Brennkammer und einen Treibstoffinjektor aufweist, wobei der Injektor eine Mehrzahl von diskreten Waifern umfasst.

Aus der US 3,463,404 ist ein Apparat für die Aufrechterhaltung eines Druckdifferentials über eine Injektoröffnung bekannt.

Aus der US 3,266,241 ist ein Injektionssystem bekannt.

Aus der US 3,242,670 sind segmentierte Treibstoffinjektorköpfe bekannt.

In der Brennkammer einer Brennkammervorrichtung, umfassend eine Brennkammer, eine erste Injektoreinrichtung zur Einbringung eines ersten Fluids in die Brennkammer und eine zweite Injektoreinrichtung zur Einbringung eines zweiten Fluids in die Brennkammer, reagieren das erste Fluid und das zweite Fluid miteinander, um Energie freizusetzen, Eine Veränderung der Energiemenge, die bezogen auf eine Zeiteinheit freigesetzt wird, geht üblicherweise mit einer entsprechenden Veränderung der Massenströme des ersten Fluids und des zweiten Fluids einher.

Für eine möglichst effiziente Reaktion des ersten Fluids und des zweiten Fluids müssen diese mit Hilfe der Injektoreinrichtungen so in die Brennkammer eingebracht werden, dass sie dort in möglichst fein verteilter, homogener Form vorliegen, um eine gute Vermischung und Verbrennung zu ermöglichen.

Hiervon ausgehend liegt der vorliegenden Erfindung die Aufgabe zu Grunde, eine Brennkammervorrichtung der eingangs genannten Art zu schaffen, mit welcher eine effiziente Verbrennung auch bei einer Veränderung der Massenströme des ersten Fluids und des zweiten Fluids gewährleistet ist.

Diese Aufgabe wird bei einer Brennkammervorrichtung der eingangs genannten Art dadurch gelöst, dass die erste Injektoreinrichtung mindestens ein erstes poröses Element umfasst, welches mit dem ersten Fluid durchströmbar ist und welches zumindest einen Teil der Brennkammer begrenzt, dass die zweite Injektoreinrichtung mindestens ein zweites poröses Element umfasst, welches mit dem zweiten Fluid durchströmbar ist, dass eine Fluidführungseinrichtung mit mindestens einer Fluidleitung zur Führung des zweiten Fluids zwischen dem zweiten Element und der Brennkammer vorgesehen ist und dass die mindestens eine Fluidleitung das erste Element durchsetzt.

Mit Hilfe der porösen Elemente können die Fluide in fein verteilter Form in die Brennkammer eingebracht werden. Dies ermöglicht eine homogene Verteilung und Vermischung der Fluide, sodass eine effiziente Verbrennung gewährleistet ist. Bei einem flüssigen Fluid wird durch die feine Verteilung des Fluids in der Brennkammer außerdem eine Verdampfung dieses Fluids, also der Übergang aus der flüssigen in die gasförmige Phase, unterstützt.

Die Verwendung poröser Elemente hat den weiteren Vorteil, dass der über diese porösen Elemente anliegende Druckverlust im Vergleich zu Injektoreinrichtungen, welche sogenannte Koaxial-Injektoren umfassen, sehr niedrig ist. Dies ermöglicht es, die Leistung der Fluidversorgungssysteme, welche den Injektoreinrichtungen ein Fluid zuleiten, zu reduzieren.

Die porösen Elemente haben den weiteren Vorteil, dass sie eine besonders gute Entkopplung zwischen der Brennkammer und einem vorgeschalteten Fluidversorgungssystem ermöglichen. Die porösen Elemente wirken als Dämpfungselemente gegen Druckschwingungen oder -schläge. Eine solche Dämpfung ist insbesondere dann vorteilhaft, wenn die Brennkammervorrichtung in einem weiten Leistungsbereich betrieben wird und somit Druckschwingungen in einem weiten Frequenzbereich und gegebenenfalls auch bei einer Resonanzfrequenz des Einspritzsystems auftreten können. Dies führt zu einer erhöhten mechanischen Belastung des Einspritzsystems und zu erhöhten akustischen Emissionen der Brennkammervorrichtung. Diese negativen Effekte können mit Hilfe der porösen Elemente der Injektoreinrichtungen zumindest abgemildert werden.

Ein weiterer Vorteil der porösen Elemente besteht darin, dass sie durch die Durchströmung mit jeweils einem der Fluide besonders gut gekühlt werden. Hierdurch ist es möglich die Verbrennungszonen der Brennkammer näher in Richtung auf mindestens eine der Injektoreinrichtungen zu verlagern. Dies ermöglicht es, die Brennkammer zu verkleinern. Hierdurch können Bauraum- und Gewichtsvorteile erzielt werden.

Die porösen Elemente ermöglichen es darüber hinaus, Bereiche außerhalb der Brennkammer gegenüber der Brennkammer abzuschirmen. Insbesondere kann ein Flammenrückschlag oder ein Flammenquenching verhindert werden.

Das erste Element begrenzt zumindest einen Teil der Brennkammer. Auf diese Weise kann ein mit Hilfe des ersten Elements aufbereitetes Fluid direkt in die Brennkammer eingeleitet werden.

Es ist eine Fluidführungseinrichtung zur Führung des zweiten Fluids zwischen dem zweiten Element und der Brennkammer vorgesehen ist. Dies ermöglicht es, das zweite Fluid mit Hilfe des zweiten Elements räumlich beabstandet zu der Brennkammer aufzubereiten und das aufbereitete Fluid dann der Brennkammer zuzuführen.

Die Fluidführungseinrichtung umfasst mindestens eine Fluidleitung. Besonders bevorzugt ist es, wenn eine Mehrzahl, insbesondere eine Vielzahl von Fluidleitungen vorgesehen ist. Mit Hilfe der mindestens einen Fluidleitung kann das mittels des zweiten Elements aufbereitete zweite Fluid in die Brennkammer eingeleitet werden. Bei einer Vielzahl von Fluidleitungen ist es möglich, eine Vielzahl von Fluideinleitungsbereichen vorzusehen, wodurch eine besonders gute Verteilung des zweiten Fluids in der Brennkammer gewährleistet ist.

Die mindestens eine Fluidleitung durchsetzt das erste Element. Dies ermöglicht es, das zweite Fluid mit Hilfe der Fluidleitung durch das erste Element hindurchzuleiten, ohne dass das zweite Fluid bereits außerhalb der Brennkammer in Kontakt mit dem ersten Fluid gerät.

Vorzugsweise umfasst die erste Injektoreinrichtung eine erste Vorkammer zur Bevorratung des ersten Fluids. Mit Hilfe einer solchen Vorkammer kann ein Raum geschaffen werden, in welchem Druckschwingungen des ersten Fluids abgebaut werden können.

Bevorzugt ist es ferner, wenn das erste Element zumindest einen Teil der ersten Vorkammer begrenzt. Dies ermöglicht es, Schwingungen des ersten Fluids innerhalb der ersten Vorkammer zu dämpfen und dieses Fluid unmittelbar dem ersten Element zuzuführen.

Besonders vorteilhaft ist es, wenn das erste Element zwischen der ersten Vorkammer und der Brennkammer angeordnet ist. Hierdurch kann eine besonders einfach aufgebaute erste Injektoreinrichtung geschaffen werden.

Nach einer Weiterbildung der Erfindung umfasst die zweite Injektoreinrichtung eine zweite Vorkammer zur Bevorratung des zweiten Fluids. Dies ermöglicht eine Schwingungsdämpfung des zweiten Fluids.

Vorzugsweise begrenzt das zweite Element zumindest einen Teil der zweiten Vorkammer. Auf diese Weise kann ein mit Hilfe der zweiten Vorkammer schwingungsgedämpftes zweites Fluid unmittelbar dem zweiten Element zugeführt werden.

Nach einer Weiterbildung der Erfindung ist das zweite Element zwischen einer ersten Vorkammer zur Bevorratung des ersten Fluids und einer zweiten Vorkammer zur Bevorratung des zweiten Fluids angeordnet. Dies ermöglicht einen kompakten Aufbau der ersten Injektoreinrichtung und der zweiten Injektoreinrichtung.

Günstig ist es ferner, wenn die mindestens eine Fluidleitung einen Leitungsquerschnitt von höchstens ca. 10 mm² aufweist. Dies hat den Vorteil, dass ein mit Hilfe des zweiten Elements aufbereitetes Fluid der Brennkammer mit einer hohen Strömungsgeschwindigkeit zugeführt werden kann. Die mindestens eine Fluidleitung kann beispielsweise einen kreisförmigen Strömungsquerschnitt aufweisen, dessen Durchmesser insbesondere zwischen 0,5 mm und 3 mm betragen kann.

Nach einer weiteren Ausführungsform der Erfindung ist zumindest ein Abschnitt der mindestens einen Fluidleitung innerhalb einer ersten Vorkammer zur Bevorratung des ersten Fluids angeordnet. Dies ermöglicht den Aufbau einer besonders kompakten ersten Injektoreinrichtung und zweiten Injektoreinrichtung.

Günstig ist es ferner, wenn die Fluidführungseinrichtung ein Fluidführungselement zur Führung des zweiten Fluids zwischen einer Fluidaustrittsfläche des zweiten Elements und einer Fluideintrittsfläche der mindestens einen Fluidleitung umfasst. Hierdurch ist es möglich, eine im Vergleich zur Fluideintrittsfläche der mindestens einen Fluidleitung große Fluidaustrittsfläche vorzusehen. Dies ermöglicht eine entsprechend großflächige Aufbereitung des zweiten Fluids.

Bevorzugt ist es ferner, wenn das Fluidführungselement eine zu der Fluidaustrittsfläche des zweiten Elements benachbart angeordnete Fluidführungsfläche aufweist. Dies ermöglicht eine besonders einfache Führung des Fluids nach Austritt aus der Fluidaustrittsfläche und vor Eintritt in die Fluidleitung.

Nach einer vorteilhaften Ausführungsform der Erfindung ist vorgesehen, dass zumindest ein Abschnitt der Fluidaustrittsfläche des zweiten Elements und zumindest ein Abschnitt der Fluidführungsfläche des Fluidführungselements aneinander anliegen. Im Bereich der aneinander anliegenden Abschnitte kann somit auf einfache Art und Weise ein Austritt des zweiten Fluids aus dem zweiten Element verhindert werden.

Vorteilhaft ist es ferner, wenn zumindest ein Abschnitt der Fluidaustrittsfläche des zweiten Elements und zumindest ein Abschnitt der Fluidführungsfläche des Fluidführungselements zueinander beabstandet sind. Auf diese Weise kann ein zusätzlicher Fluidraum geschaffen werden, welcher schwingungsdämpfend wirksam ist.

Vorzugsweise ist mindestens ein Abstandselement zur Beabstandung zumindest eines Abschnitts der Fluidaustrittsfläche des zweiten Elements und zumindest eines Abschnitts der Fluidführungsfläche des Fluidführungselements vorgesehen. Ein solches Abstandselement ermöglicht eine einfache Festlegung des Abstands zwischen dem zweiten Element und dem Fluidführungselement und somit eine Dimensionierung eines dämpfend wirkenden Fluidraums.

Vorzugsweise ist das mindestens eine Abstandselement mit dem Fluidführungselement einstückig ausgebildet. Dies vereinfacht die Herstellung und die Montage der Brennkammervorrichtung.

Eine weitere bevorzugte Ausführungsform der Erfindung sieht vor, dass zumindest ein Abschnitt der Fluidaustrittsfläche des zweiten Elements und die Fluideintrittsfläche der mindestens einen Fluidleitung aneinander anliegen. Dies ermöglicht eine unmittelbare Überführung des zweiten Fluids aus dem zweiten Element in die Fluidleitung.

Nach einer weiteren vorteilhaften Ausführungsform der Erfindung ist vorgesehen, dass zumindest ein Abschnitt der Fluidaustrittsfläche des zweiten Elements und die Fluideintrittsfläche der mindestens einen Fluidleitung zueinander beabstandet sind. Hierdurch ist eine zuverlässige Einkopplung des zweiten Fluids in die Fluidleitung hinein auch dann gewährleistet, wenn die Fluidleitung eine sehr kleine Fluideintrittsfläche aufweist und wenn das zweite Element relativ grobe Porenbegrenzungen aufweist.

Günstig ist es, wenn die Fluidführungseinrichtung und das zweite Element miteinander einstückig hergestellt sind. Die vereinfacht die Herstellung und Montage der Brennkammervorrichtung.

Vorteilhaft ist es ferner, wenn das erste Element und das zweite Element miteinander einstückig hergestellt sind. Hierdurch ergibt sich ein besonders einfacher Aufbau der Brennkammervorrichtung. Insbesondere können die Fluidführungseinrichtung, das erste Element und das zweite Element miteinander einstückig hergestellt sein.

Bevorzugt ist es ferner, wenn mindestens eines der Elemente plattenförmig ist. Hierbei definiert die Dicke eines plattenförmigen Elements den für das erste oder das zweite Fluid zur Verfügung stehenden Durchströmungsweg durch das Element hindurch. Die Erstreckung der Platte in einer zur Plattendicke senkrechten Richtung definiert die Größe der Fluideintrittsfläche für ein mit Hilfe des Elements aufzubereitendes Fluid und die Größe der Fluidaustrittsfläche für ein aufbereitetes Fluid.

Eine besonders vorteilhafte Ausführungsform der Erfindung sieht vor, dass erste Element und das zweite Element unterschiedlich porös sind. Hierdurch ist eine optimale Aufbereitung von hinsichtlich ihrer Zusammensetzung und/oder ihres Phasenzustandes unterschiedlichen ersten und zweiten Fluiden ermöglicht.

Insbesondere ist mindestens eines der Elemente aus einem metallischen Material hergestellt. Beispielsweise kann ein solches Element aus Sintermetall oder Metallschaum hergestellt sein, beispielsweise aus Sinterbronze. Metallische Materialien haben den Vorteil einer hohen Wärmeleitfähigkeit.

Nach einer weiteren Ausführungsform der Erfindung ist mindestens eines der Elemente aus einem keramischen Material hergestellt und somit besonders unempfindlich gegenüber hohen Temperaturen.

Eine weitere Ausführungsform der Erfindung sieht vor, dass das erste Element und das zweite Element in zueinander zumindest annährend parallelen Richtungen durchströmbar sind. Hierdurch können das erste Fluid und das zweite Fluid in denselben Richtungen in die Brennkammer hineingeleitet werden, ohne dass hierfür mindestens eines der Fluide umgelenkt werden müsste. Günstig ist es, wenn die Brennkammer eine zentrale Brennkammerachse aufweist. Insbesondere ist die Brennkammer zu der zentralen Brennkammerachse rotationssymmetrisch, beispielsweise zylindrisch.

Nach einer vorteilhaften Ausführungsform der Erfindung sind das erste Element und das zweite Element entlang der Brennkammerachse gesehen hintereinander angeordnet. Dies ermöglicht eine Aufbereitung des ersten Fluids und des zweiten Fluids und eine Zuführung in die Brennkammer in zueinander parallelen Richtungen.

Nach einer weiteren Ausführungsform der Erfindung weist mindestens eines der Elemente in zu der Brennkammerachse parallelen Richtungen unterschiedliche Elementdicken auf. Hierdurch kann der Strömungswiderstand eines Elements lokal beeinflusst werden, insbesondere um die Einleitung des aufbereiteten Fluids in die Brennkammer hinein zu beeinflussen.

Besonders bevorzugt ist es, wenn mindestens eines der Elemente eine bezogen auf die Brennkammerachse symmetrische Elementdickenverteilung aufweist. Hierdurch ist eine zu der Brennkammerachse symmetrische Einleitung eines aufbereiteten Fluids in die Brennkammer hinein gewährleistet.

Günstig ist es, wenn mindestens eines der Elemente einen bezogen auf die Brennkammerachse zentralen Abschnitt und einen bezogen auf die Brennkammerachse dezentralen Abschnitt aufweist, wobei eine Elementdicke des dezentralen Abschnitts höher ist als eine Elementdicke des zentralen Abschnitts. Auf diese Weise kann eine Einleitung des Fluids in die Brennkammer hinein in einem zentralen Bereich der Brennkammer erhöht und in einem dezentralen Bereich der Brennkammer verringert werden. Auf diese Weise kann im Bereich einer Brennkammerwand ein reduziertes Mischungsverhältnis erzielt werden, wodurch die Wärmebelastung der Brennkammerwand sinkt.

Eine weitere Ausführungsform der Erfindung sieht vor, dass die Brennkammervorrichtung mindestens ein Brennkammergehäuse aufweist, an welchem mindestens eines der Elemente lösbar befestigbar oder befestigt ist. Dies ermöglicht einen Austausch des mindestens einen Elements, beispielsweise zu Wartungszwecken oder um die Brennkammervorrichtung für die Verwendung eines bestimmten Fluids zu optimieren.

In vorteilhafter Weise handelt es sich bei dem ersten Fluid um einen Brennstoff, insbesondere um Wasserstoff, Methan oder Ethanol.

Bevorzugt ist es ferner, wenn das erste Fluid bei Eintritt in das erste Element in einem gasförmigen oder überkritischen Zustand vorliegt. Vorzugsweise liegt ein Brennstoff in Form von Wasserstoff in einem hinsichtlich des Drucks und der Temperatur überkritischen Zustand vor. Ein Brennstoff in Form von Methan liegt vorzugsweise in einem zumindest hinsichtlich des Drucks überkritischen Zustand vor. Bei Verwendung von Ethanol als Brennstoff kann dieser auch in einem flüssigen Zustand vorliegen.

Günstig ist es ferner, wenn das zweite Fluid ein Oxidator ist, beispielsweise Sauerstoff.

Vorzugsweise liegt das zweite Fluid bei Eintritt in das zweite Element in einem flüssigen oder überkritischen Zustand vor. Vorzugsweise liegt ein Oxidator in Form von Sauerstoff in einem hinsichtlich des Drucks überkritischen Zustand vor ("compressed liquid" oder "subcooled liquid").

Die Erfindung betrifft ferner ein Triebwerk mit einer vorstehend beschriebenen Brennkammervorrichtung, insbesondere ein Raketentriebwerk. Ein solches Raketentriebwerk kann insbesondere mit kryogenen Fluiden betrieben.

Die Erfindung betrifft ferner eine Heizungsvorrichtung mit einer vorstehend beschriebenen Brennkammervorrichtung, insbesondere einen Heizkessel.

Die erfindungsgemäße Brennkammervorrichtung kann auch in Luftfahrtantrieben, in Gasturbinen, in der Verfahrenstechnik, der chemischen Industrie und bei Verbrennungsmotoren insbesondere von Kraftfahrzeugen eingesetzt werden.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Figur 1: eine Seitenansicht einer Ausführungsform einer Rakete mit einem Triebwerk;
- Figur 2: einen Schnitt durch eine Ausführungsform einer Brennkammervorrichtung;
- Figur 3: einen in Figur 2 mit III markierten Ausschnitt;
- Figur 4: eine der Figur 3 entsprechende Ansicht einer weiteren Ausführungsform einer Brennkammervorrichtung;
- Figur 5: eine der Figur 3 entsprechende Ansicht einer weiteren Ausführungsform einer Brennkammervorrichtung;
- Figur 6: eine Vorderansicht einer Ausführungsform eines Fluidführungselements;
- Figur 7: eine Vorderansicht einer weiteren Ausführungsform eines Fluidführungselements; und
- Figuren 8 und 9: schematische Seitenschnitte von Ausführungsformen einer Brennkammervorrichtung unter Verwendung poröser Elemente mit unterschiedlichen Dicken.

Gleiche oder funktional äquivalente Elemente sind in allen Figuren mit denselben Bezugszeichen bezeichnet.

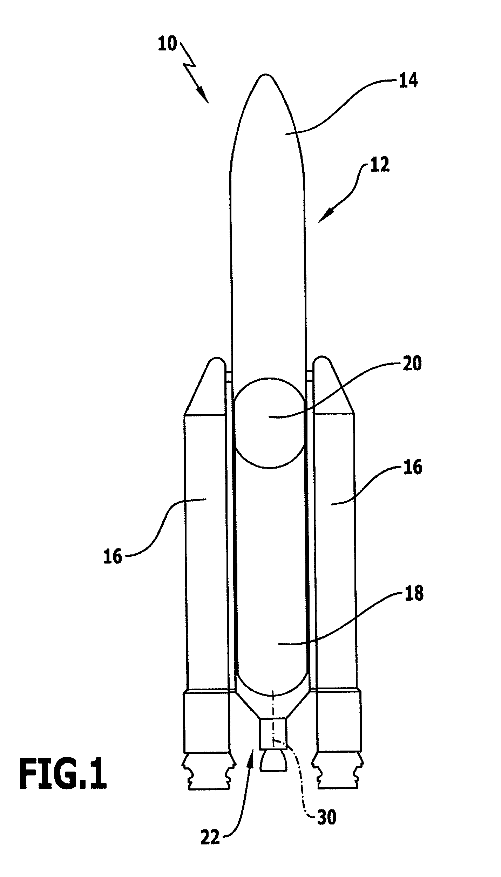

Eine Ausführungsform einer mit 10 bezeichneten Rakete ist in der Figur 1 dargestellt. Die Rakete 10 weist einen Hauptkörper 12 auf, mit dem eine Nutzlasteinheit 14 befördert werden kann. Die Rakete 10 umfasst ferner zwei Feststoff-Booster 16.

Der Hauptkörper 12 weist einen ersten Tank 18 für ein erstes Fluid auf. Bei dem ersten Fluid handelt es sich beispielsweise um einen Brennstoff, insbesondere um flüssigen Wasserstoff.

Der Hauptkörper 12 weist ferner einen zweiten Tank 20 für ein zweites Fluid auf. Bei dem zweiten Fluid handelt es sich insbesondere um einen Oxidator, beispielsweise um flüssigen Sauerstoff (LOX).

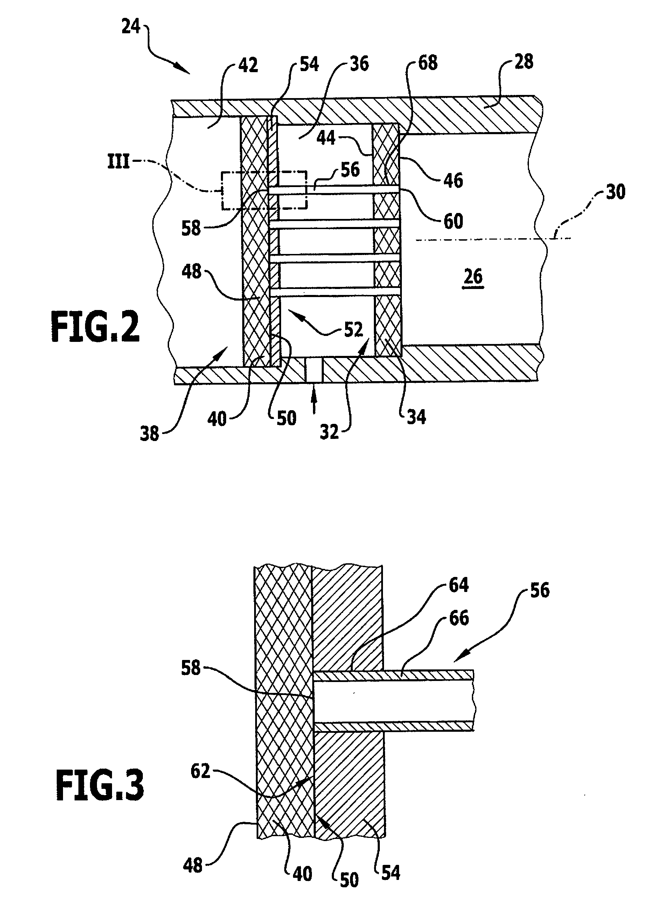

Der Hauptkörper 12 der Rakete 10 weist ein Triebwerk 22 auf, welches eine Brennkammervorrichtung 24 umfasst (Fig. 2). Die Brennkammervorrichtung 24 umfasst eine Brennkammer 26, in welcher das erste Fluid und das zweite Fluid miteinander reagieren, um einen Schub zum Antrieb der Rakete 10 zu erzeugen.

Die Brennkammer 26 ist mittels eines insbesondere zylindrischen Brennkammergehäuses 28 begrenzt. Dieses erstreckt sich entlang einer zentralen Brennkammerachse 30.

Die Brennkammervorrichtung 24 weist eine erste Injektoreinrichtung 32 zur Einbringung des ersten Fluids in die Brennkammer 26 auf. Die erste Injektoreinrichtung 32 umfasst ein poröses erstes Element 34, welches vorzugsweise plattenförmig ausgebildet ist. Das erste Element 34 erstreckt sich insbesondere quer zu der Brennkammerachse 30 und begrenzt gemeinsam mit dem Brennkammergehäuse 28 die Brennkammer 26.

Die erste Injektoreinrichtung 32 umfasst eine erste Vorkammer 36, welche fluidwirksam mit dem ersten Tank 18 der Rakete 10 verbunden ist.

Die Brennkammervorrichtung 24 umfasst ferner eine zweite Injektoreinrichtung 38 mit einem zweiten porösen Element 40. Das Element 40 ist insbesondere plattenförmig ausgebildet.

Das zweite Element 40 grenzt an eine zweite Vorkammer 42, welche fluidwirksam mit dem zweiten Tank 20 der Rakete 10 verbunden ist. Das erste Element 34 und das zweite Element 40 sind entlang der Brennkammerachse 30 gesehen hintereinander angeordnet. Das erste Element 34 ist zwischen der Brennkammer 26 und der ersten Vorkammer 36 angeordnet. Das zweite Element 40 ist zwischen der ersten Vorkammer 36 und der zweiten Vorkammer 42 angeordnet.

Das erste Element 34 weist eine der Brennkammer 36 angewandte Fluideintrittsfläche 44 sowie eine der Brennkammer 36 zugewandte Fluidaustrittsfläche 46 auf. Ein in der ersten Vorkammer 36 enthaltenes erstes Fluid tritt über die Fluideintrittsfläche 44 in das erste Element 34 ein, durchströmt dieses, tritt an der Fluidaustrittsfläche 46 wieder aus und gelangt in fein verteilter Form in die Brennkammer 26.

Das zweite Element 40 weist eine der Brennkammer 26 abgewandte Fluideintrittsfläche 48 sowie eine der Brennkammer 26 zugewandte Fluidaustrittsfläche 50 auf. Ein in der zweiten Vorkammer 38 enthaltenes zweites Fluid tritt über die Fluideintrittsfläche 48 in das zweite Element 40 ein, durchströmt dieses und gelangt zu der Fluidaustrittsfläche 50.

Zur Führung des zweiten Fluids zwischen der Fluidaustrittsfläche 50 des zweiten Elements 40 und der Brennkammer 26 umfasst die Brennkammervorrichtung 24 eine Fluidführungseinrichtung 52. Die Fluidführungseinrichtung 52 umfasst ein Fluidführungselement 54, welches insbesondere plattenförmig ausgebildet ist. Das Fluidführungselement 54 ist zwischen der ersten Vorkammer 36 und dem zweiten Element 40 angeordnet.

Die Fluidführungseinrichtung 52 umfasst ferner eine Mehrzahl von Fluidleitungen 56, welche eine fluidwirksame Verbindung zwischen der Fluidaustrittsfläche 50 des zweiten Elements 40 und der Brennkammer 26 herstellen. Die Fluidleitungen 56 erstrecken sich insbesondere parallel zu der Brennkammerachse 30. Alternativ hierzu erstreckt sich mindestens eine Fluidleitung schräg zu der Brennkammerachse 30; in diesem Fall kann ein mit Hilfe der Fluidleitungen 56 in die Brennkammer 26 eingeführtes zweites Fluid unterschiedlichen Brennpunkten zugeführt werden.

Die Fluidleitungen 56 weisen eine der Fluidaustrittsfläche 50 des zweiten Elements 40 zugewandte Fluideintrittsfläche 58 sowie eine Fluidaustrittsfläche 60 auf, welche vorzugsweise auf Höhe der Fluidaustrittsfläche 46 des ersten Elements 34 oder innerhalb der Brennkammer 26 angeordnet ist.

Die Fluidleitungen 56 sind insbesondere zylindrisch und weisen einen Durchmesser von vorzugsweise zwischen ungefähr 0,5 mm und ungefähr 3 mm auf.

Das Fluidführungselement 54 weist eine Fluidführungsfläche 62 auf, welche benachbart zu der Fluidaustrittsfläche 50 des zweiten Elements 40 angeordnet ist. Die Fluidführungsfläche 62 verhindert ein Eindringen des zweiten Fluids in die erste Vorkammer 36. Das Fluidführungselement 54 weist eine Vielzahl von Durchbrechungen 64 auf, welche jeweils zur Aufnahme einer Leitungswand 66 einer Fluidleitung 56 dienen.

Das erste Element 34 weist entsprechende Durchbrechungen 68 für die Leitungswand 66 einer Fluidleitung 56 auf.

Ein in der zweiten Vorkammer 42 enthaltenes zweites Fluid wird mittels der Fluidführungseinrichtung 52 der Brennkammer 26 zugeführt, ohne dass das zweite Fluid bereits auf Höhe der ersten Vorkammer 36 und oder auf Höhe des ersten Elements 34 in Kontakt mit dem ersten Fluid gerät. Dadurch, dass die Fluidführungseinrichtung 52 eine Vielzahl von Fluidleitungen 56 aufweist, kann das mit Hilfe des zweiten Elements 40 in feinverteilter Form in die Brennkammer 26 eingeleitet werden.

Nach einer Ausführungsform der Erfindung liegt zumindest ein Abschnitt der Fluidaustrittsfläche 50 des zweiten Elements 40 an zumindest einem Abschnitt der Fluidführungsfläche 62 des Fluidführungselements 54 an (vgl. Fig. 3).

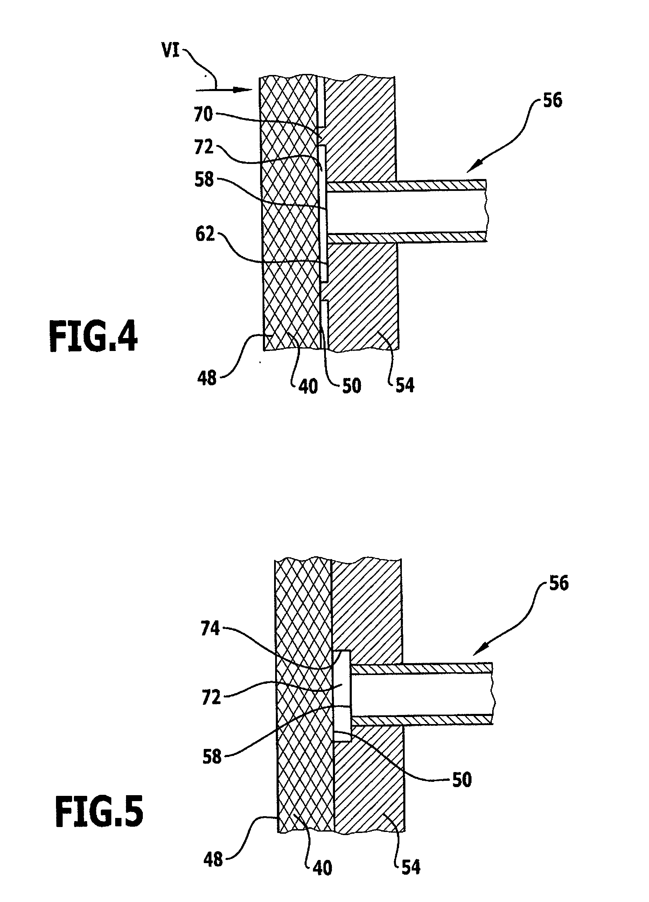

Nach einer weiteren Ausführungsform ist zumindest ein Abschnitt der Fluidaustrittsfläche 50 des zweiten Elements zu der Fluidführungsfläche 62 des Fluidführungselements 54 beabstandet (vgl. Fig. 4). Zur Beabstandung der Fläche 50 und 62 ist mindestens ein Abstandselement 70 vorgesehen, welches insbesondere einstückig mit dem Fluidführungselement 54 ausgebildet ist. Durch die Beabstandung der Flächen 50 und 62 entsteht ein Fluidraum 72, welcher fluiddynamisch dämpfend wirkt. Eine besonders gute Dämpfungswirkung wird erreicht, wenn auch die Fluideintrittsfläche 58 zu der Fluidaustrittsfläche 50 beabstandet ist (vgl. Fig. 4 und 5).

Eine Beabstandung der Fluidaustrittsfläche 50 zu der Fluidleitung 56 kann mit Hilfe der oben beschriebenen Abstandselemente 70 (Fig. 4) erreicht werden und/oder indem das Fluidführungselement 54 mit einer Ausnehmung 74 versehen ist (Fig. 5).

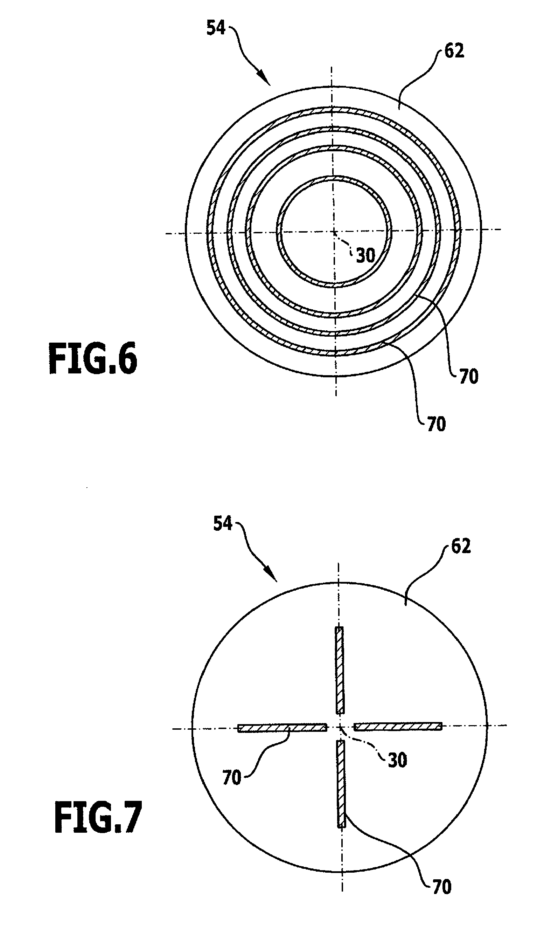

In den Figuren 6 und 7 sind Ausführungsformen von Fluidführungselementen 54 dargestellt bei Ansicht entsprechend einer in Figur 4 mit VI bezeichneten Richtung. In den Figuren 6 und 7 sind die zweiten Elemente 40 sowie die Fluidleitungen 56 aus Gründen der besseren Übersichtlichkeit nicht dargestellt.

Die Abstandselemente 70 können beispielsweise einen kreisförmigen Verlauf aufweisen (Fig. 6). Insbesondere können mehrere Abstandselemente 70 vorgesehen sein, welche konzentrisch zu der Brennkammerachse 30 verlaufen. Alternativ hierzu können sich die Abstandselemente 70 auch in einer bezogen auf die Brennkammerachse 30 radialen Richtung erstrecken (vgl. Fig. 7). Es können beispielsweise vier Abstandselemente 70 vorgesehen sei, welche jeweils paarweise einen rechten Winkel miteinander einschließen.

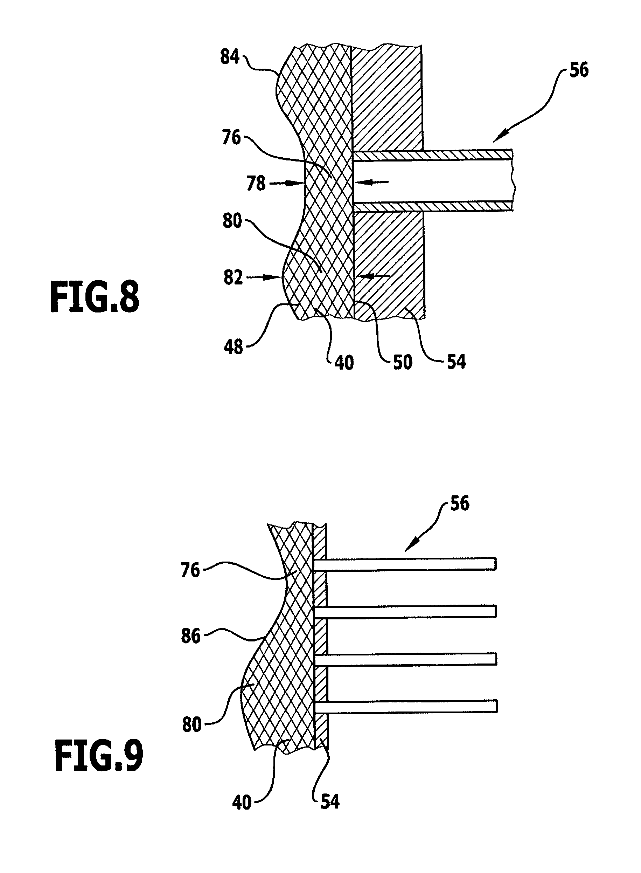

Mindestens eines der porösen Elemente 34, 40 kann unterschiedliche Elementdicken aufweisen. Eine Elementdicke eines Elements 34, 40 ist definiert durch den Abstand zwischen einer Fluideintrittsfläche und einer Fluidaustrittsfläche eines Elements. Beispielsweise kann ein zweites Element 40 einen zentralen Abschnitt 76 aufweisen, in welchem das Element 40 eine vergleichsweise niedrige Elementdicke 78 aufweist (Fig. 8). Ferner kann das Element 40 einen dezentralen Abschnitt 80 aufweisen, welcher eine im Vergleich zu der Elementdicke 78 höhere Elementdicke 82 aufweist.

Vorzugsweise sind Abschnitte eines porösen Elements 34, 40 mit einer niedrigeren Elementdicke im Bereich der Brennkammerachse 30 angeordnet und dezentrale Abschnitte mit einer höheren Elementdicke zu der Brennkammerachse 30 beabstandet und vorzugsweise zu dem Brennkammergehäuse 28 benachbart angeordnet.

Die Verteilung der Elementdicken kann bezogen auf die Brennkammerachse 30 symmetrisch sein und/oder asymmetrisch. Bevorzugt ist es, wenn die porösen Elemente einen kontinuierlichen Elementdickenverlauf 84 (Fig. 8) oder 86 (Fig. 9) aufweisen.

Bei einer weiteren, in der Zeichnung nicht dargestellten Ausführungsform einer Brennkammervorrichtung 24 weist mindestens eines der porösen Elemente 34, 40 eine kuppelförmige Fluideintrittsfläche und/oder Fluidaustrittsfläche auf und/oder ist ein kuppelförmiges Fluidführungselement 54 vorgesehen.

## Patentansprüche

1. Brennkammervorrichtung (24), umfassend eine Brennkammer (26), eine erste Injektoreinrichtung (32) zur Einbringung eines ersten Fluids in die Brennkammer (26) und eine zweite Injektoreinrichtung (38) zur Einbringung eines zweiten Fluids in die Brennkammer (26),
**dadurch gekennzeichnet, dass** die erste Injektoreinrichtung (32) mindestens ein erstes poröses Element (34) umfasst, welches mit dem ersten Fluid durchströmbar ist und welches zumindest einen Teil der Brennkammer (26) begrenzt, dass die zweite Injektoreinrichtung (38) mindestens ein zweites poröses Element (40) umfasst, welches mit dem zweiten Fluid durchströmbar ist, dass eine Fluidführungseinrichtung (52) mit mindestens einer Fluidleitung (56) zur Führung des zweiten Fluids zwischen dem zweiten Element (40) und der Brennkammer (26) vorgesehen ist und dass die mindestens eine Fluidleitung (56) das erste Element (34) durchsetzt.

2. Brennkammervorrichtung (24) nach Anspruch 1, **dadurch gekennzeichnet, dass** die erste Injektoreinrichtung (32) eine erste Vorkammer (36) zur Bevorratung des ersten Fluids umfasst.

3. Brennkammervorrichtung (24) nach Anspruch 2, **dadurch gekennzeichnet, dass** das erste Element (34) zumindest einen Teil der ersten Vorkammer (36) begrenzt, und insbesondere, dass das erste Element (34) zwischen der ersten Vorkammer (36) und der Brennkammer (26) angeordnet ist.

4. Brennkammervorrichtung (24) nach einem der vorhergehenden Ansprüche, **dadurch gekennzeichnet, dass** die zweite Injektoreinrichtung (38) eine zweite Vorkammer (40) zur Bevorratung des zweiten Fluids umfasst, und insbesondere, dass das zweite Element (40) zumindest einen Teil der zweiten Vorkammer (42) begrenzt.

5. Brennkammervorrichtung (24) nach einem der vorhergehenden Ansprüche, **dadurch gekennzeichnet, dass** das zweite Element (40) zwischen einer ersten Vorkammer (36) zur Bevorratung des ersten Fluids und einer zweiten Vorkammer (42) zur Bevorratung des zweiten Fluids angeordnet ist.

6. Brennkammervorrichtung (24) nach einem der vorhergehenden Ansprüche, **dadurch gekennzeichnet, dass** zumindest ein Abschnitt der mindestens einen Fluidleitung (56) innerhalb einer ersten Vorkammer (36) zur Bevorratung des ersten Fluids angeordnet ist.

7. Brennkammervorrichtung (24) nach einem der vorhergehenden Ansprüche, **dadurch gekennzeichnet, dass** die Fluidführungseinrichtung (52) ein Fluidführungselement (54) zur Führung des zweiten Fluids zwischen einer Fluidaustrittsfläche (50) des zweiten Elements (40) und einer Fluideintrittsfläche (58) der mindestens einen Fluidleitung (56) umfasst, und insbesondere, dass das Fluidführungselement (54) eine zu der Fluidaustrittsfläche (60) des zweiten Elements (40) benachbart angeordnete Fluidführungsfläche (62) aufweist, und insbesondere, dass zumindest ein Abschnitt der Fluidaustrittsfläche (50) des zweiten Elements (40) und zumindest ein Abschnitt der Fluidführungsfläche (62) des Fluidführungselements (54) aneinander anliegen, und insbesondere, dass zumindest ein Abschnitt der Fluidaustrittsfläche (50) des zweiten Elements (40) und zumindest ein Abschnitt der Fluidführungsfläche (62) des Fluidführungselements (54) zueinander beabstandet sind, und insbesondere **gekennzeichnet durch** mindestens ein Abstandselement (70) zur Beabstandung zumindest eines Abschnitts der Fluidaustrittsfläche (50) des zweiten Elements (40) und zumindest eines Abschnitts der Fluidführungsfläche (62) des Fluidführungselements (54), und insbesondere, dass das mindestens eine Abstandselement (70) mit dem Fluidführungselement (54) einstückig ausgebildet ist, und insbesondere, dass zumindest ein Abschnitt der Fluidaustrittsfläche (50) des zweiten Elements (40) und die Fluideintrittsfläche (58) der mindestens einen Fluidleitung (56) aneinander anliegen, und insbesondere, dass zumindest ein Abschnitt der Fluidaustrittsfläche (50) des zweiten Elements (40) und die Fluideintrittsfläche (58) der mindestens einen Fluidleitung (56) zueinander beabstandet sind.

8. Brennkammervorrichtung (24) nach einem der vorhergehenden Ansprüche, **dadurch gekennzeichnet, dass** die Fluidführungseinrichtung (52) und das zweite Element (40) miteinander einstückig hergestellt sind und/oder dass das erste Element (34) und das zweite Element (40) miteinander einstückig hergestellt sind.

9. Brennkammervorrichtung (24) nach einem der vorhergehenden Ansprüche, **dadurch gekennzeichnet, dass** das erste Element (34) und das zweite Element (40) unterschiedlich porös sind.

10. Brennkammervorrichtung (24) nach einem der vorhergehenden Ansprüche, **dadurch gekennzeichnet, dass** mindestens eines der Elemente (34, 40) aus einem metallischen Material hergestellt ist.

11. Brennkammervorrichtung (24) nach einem der vorhergehenden Ansprüche, **dadurch gekennzeichnet, dass** mindestens eines der Elemente (34, 40) aus einem keramischen Material hergestellt ist.

12. Brennkammervorrichtung (24) nach einem der vorhergehenden Ansprüche, **dadurch gekennzeichnet, dass** das erste Element (34) und das zweite Element (40) in zueinander zumindest annähernd parallelen Richtungen durchströmbar sind.

13. Brennkammervorrichtung (24) nach einem der vorhergehenden Ansprüche, **dadurch gekennzeichnet, dass** die Brennkammer (26) eine zentrale Brennkammerachse (30) aufweist, und insbesondere, dass das erste Element (34) und das zweite Element (40) entlang der Brennkammerachse (30) gesehen hintereinander angeordnet sind, und insbesondere, dass mindestens eines der Elemente (34, 40) in zu der Brennkammerachse (30) parallelen Richtungen unterschiedliche Elementdicken (82) aufweist, und insbesondere, dass mindestens eines der Elemente (34, 40) eine bezogen auf die Brennkammerachse (30) symmetrische Elementdickenverteilung aufweist, und insbesondere dass mindestens eines der Elemente (34, 40) einen bezogen auf die Brennkammerachse (30) zentralen Abschnitt und einen bezogen auf die Brennkammerachse (30) dezentralen Abschnitt (80) aufweist, wobei eine Elementdicke (82) des dezentralen Abschnitts (80) höher ist als eine Elementdicke (78) des zentralen Abschnitts (76).

14. Triebwerk (22) mit einer Brennkammervorrichtung (24) nach einem der vorhergehenden Ansprüche.

15. Heizungsvorrichtung mit einer Brennkammervorrichtung (24) nach einem der Ansprüche 1 bis 13.

## Claims

1. Combustion chamber apparatus (24), comprising a combustion chamber (26), a first injector device (32) for introducing a first fluid into the combustion chamber (26), and a second injector device (38) for introducing a second fluid into the combustion chamber (26),
**characterized in that** the first injector device (32) comprises at least a first porous element (34) which is adapted to have the first fluid flow therethrough and which delimits at least part of the combustion chamber (26), **in that** the second injector device (38) comprises at least a second porous element (40) which is adapted to have the second fluid flow therethrough, **in that** a fluid guide device (52) having at least one fluid conduit (56) for conducting the second fluid between the second element (40) and the combustion chamber (26) is provided, and **in that** the at least one fluid conduit (56) extends through the porous element (34).

2. Combustion chamber apparatus (24) in accordance with claim 1, **characterized in that** the first injector device (32) comprises a first prechamber (36) for storing the first fluid.

3. Combustion chamber apparatus (24) in accordance with claim 2, **characterized in that** the first element (34) delimits at least part of the first prechamber (36) and in particular **in that** the first element (34) is arranged between the first prechamber (36) and the combustion chamber (26).

4. Combustion chamber apparatus (24) in accordance with any one of the preceding claims, **characterized in that** the second injector device (38) comprises a second prechamber (42) for storing the second fluid, and in particular **in that** the second element (40) delimits at least part of the second prechamber (42).

5. Combustion chamber apparatus (24) in accordance with any one of the preceding claims, **characterized in that** the second element (40) is arranged between a first prechamber (36) for storing the first fluid and a second prechamber (42) for storing the second fluid.

6. Combustion chamber apparatus (24) in accordance with any one of the preceding claims, **characterized in that** at least a section of the at least one fluid conduit (56) is arranged within a first prechamber (36) for storing the first fluid.

7. Combustion chamber apparatus (24) in accordance with any one of the preceding claims, **characterized in that** the fluid guide device (52) comprises a fluid guide element (54) for guiding the second fluid between a fluid outlet face (50) of the second element (40) and a fluid inlet face (58) of the at least one fluid conduit (56), and in particular **in that** the fluid guide element (54) has a fluid guide face (62) adjacent to the fluid outlet face (50) of the second element (40), and in particular **in that** at least a section of the fluid outlet face (50) of the second element (40) and at least a section of the fluid guide face (62) of the fluid guide element (54) are in contact with one another, and in particular **in that** at least a section of the fluid outlet face (50) of the second element (40) and at least a section of the fluid guide face (62) of the fluid guide element (54) are spaced from another, and **characterized in** particular by at least one spacer element (70) for spacing at least a section of the fluid outlet face (50) of the second element (40) and at least a section of the fluid guide face (62) of the fluid guide element (54), and in particular **in that** the at least one spacer element (70) is formed in one piece with the fluid guide element (54), and in particular **in that** at least a section of the fluid outlet face (50) of the second element (40) and the fluid inlet face (58) of the at least one fluid conduit (56) are in contact with one another, and in particular **in that** at least a section of the fluid outlet face (50) of the second element (40) and the fluid inlet face (58) of the at least one fluid conduit (56) are spaced from another.

8. Combustion chamber apparatus (24) in accordance with any one of the preceding claims, **characterized in that** the fluid guide device (52) is made in one piece with the second element (40) and/or **in that** the first element (34) is made in one piece with the second element (40).

9. Combustion chamber apparatus (24) in accordance with any one of the preceding claims, **characterized in that** the first element (34) and the second element (40) are of different porosities.

10. Combustion chamber apparatus (24) in accordance with any one of the preceding claims, **characterized in that** at least one of the elements (34, 40) is made of a metal material.

11. Combustion chamber apparatus (24) in accordance with any one of the preceding claims, **characterized in that** at least one of the elements (34, 40) is made of a ceramic material.

12. Combustion chamber apparatus (24) in accordance with any one of the preceding claims, **characterized in that** the first element (34) and the second element (40) are adapted for flow therethrough in at least approximately parallel directions.

13. Combustion chamber apparatus (24) in accordance with any one of the preceding claims, **characterized in that** the combustion chamber (26) has a central combustion chamber axis (30), and in particular **in that** the first element (34) and the second element (40) are arranged one behind the other, as viewed along the combustion chamber axis (30), and in particular **in that** at least one of the elements (34, 40) has different element thicknesses in directions parallel to the combustion chamber axis (30), and in particular **in that** at least one of the elements (34, 40) has a symmetric element thickness distribution with respect to the combustion chamber axis (30), and in particular **in that** at least one of the elements (34, 40) has a central section with respect to the combustion chamber axis (30) and a non-central section (80) with respect to the combustion chamber axis (30), wherein an element thickness (82) of the non-central section (80) is higher than an element thickness (78) of the central section (76).

14. Engine (22) having a combustion chamber apparatus (24) in accordance with any one of the preceding claims.

15. Heating apparatus having a combustion chamber apparatus (24) in accordance with any one of claims 1 to 13.

## Revendications

1. Dispositif de chambre de combustion (24), comprenant une chambre de combustion (26), un premier dispositif injecteur (32) pour l'introduction d'un premier fluide dans la chambre de combustion (26) et un second dispositif injecteur (38) pour l'introduction d'un second fluide dans la chambre de combustion (26), **caractérisé en ce que** le premier dispositif injecteur (32) comporte au moins un premier élément poreux (34) qui peut être traversé par le premier fluide et qui délimite au moins une partie de la chambre de combustion (26), **en ce que** le second dispositif injecteur (38) comporte au moins un second élément poreux (40) qui peut être traversé par le second fluide, **en ce qu'**un dispositif de guidage de fluide (52) avec au moins une conduite de fluide (56) est prévu pour le guidage du second fluide entre le second élément (40) et la chambre de combustion (26) et **en ce qu'**au moins une conduite de fluide (56) traverse le premier élément (34).

2. Dispositif de chambre de combustion (24) selon la revendication 1, **caractérisé en ce que** le premier dispositif injecteur (32) comporte une première préchambre (36) servant de réservoir au premier fluide.

3. Dispositif de chambre de combustion (24) selon la revendication 2, **caractérisé en ce que** le premier élément (34) délimite au moins une partie de la première préchambre (36), et en particulier **en ce que** le premier élément (34) est disposé entre la première préchambre (36) et la chambre de combustion (26).

4. Dispositif de chambre de combustion (24) selon l'une quelconque des revendications précédentes, **caractérisé en ce que** le second dispositif injecteur (38) comporte une seconde préchambre (42) servant de réservoir au second fluide, et en particulier **en ce que** le second élément (40) délimite au moins une partie de la seconde préchambre (42).

5. Dispositif de chambre de combustion (24) selon l'une quelconque des revendications précédentes, **caractérisé en ce que** le second élément (40) est disposé entre une première préchambre (36) servant de réservoir au premier fluide et une seconde préchambre (42) servant de réservoir au second fluide.

6. Dispositif de chambre de combustion (24) selon l'une quelconque des revendications précédentes, **caractérisé en ce qu'**au moins une section d'au moins une conduite de fluide (56) est disposée dans une première préchambre (36) servant de réservoir au premier fluide.

7. Dispositif de chambre de combustion (24) selon l'une quelconque des revendications précédentes, **caractérisé en ce que** le dispositif de guidage de fluide (52) comporte un élément de guidage de fluide (54) pour le guidage du second fluide entre une surface de sortie de fluide (50) du second élément (40) et une surface d'entrée de fluide (58) d'au moins une conduite de fluide (56), et en particulier **en ce que** l'élément de guidage de fluide (54) présente une surface de guidage de fluide (62) disposée de manière contiguë à la surface de sortie de fluide (50) du second élément (40), et en particulier **en ce qu'**au moins une section de la surface de sortie de fluide (50) du second élément (40) et au moins une section de la surface de guidage de fluide (62) de l'élément de guidage de fluide (54) reposent l'une sur l'autre, et en particulier **en ce qu'**au moins une section de la surface de sortie de fluide (50) du second élément (40) et au moins une section de la surface de guidage de fluide (62) de l'élément de guidage de fluide (54) sont espacées l'une de l'autre, et en particulier **caractérisé par** au moins un élément d'écartement (70) destiné à écarter au moins une section de la surface de sortie de fluide (50) du second élément (40) et au moins une section de la surface de guidage de fluide (62) de l'élément de guidage de fluide (54), et en particulier en ce qu'au moins un élément d'écartement (70) est réalisé d'un seul tenant avec l'élément de guidage de fluide (54), et en particulier en ce qu'au moins une section de la surface de sortie de fluide (50) du second élément (40) et la surface d'entrée de fluide (58) d'au moins une conduite de fluide (56) reposent l'une sur l'autre, et en particulier en ce qu'au moins une section de la surface de sortie de fluide (50) du second élément (40) et la surface d'entrée de fluide (58) d'au moins une conduite de fluide (56) sont espacées l'une de l'autre.

8. Dispositif de chambre de combustion (24) selon l'une quelconque des revendications précédentes, **caractérisé en ce que** le dispositif de guidage de fluide (52) et le second élément (40) sont fabriqués d'un seul tenant et/ou **en ce que** le premier élément (34) et le second élément (40) sont fabriqués d'un seul tenant.

9. Dispositif de chambre de combustion (24) selon l'une quelconque des revendications précédentes, **caractérisé en ce que** le premier élément (34) et le second élément (40) présentent une porosité différente.

10. Dispositif de chambre de combustion (24) selon l'une quelconque des revendications précédentes, **caractérisé en ce qu'**au moins l'un des éléments (34, 40) est fabriqué en un matériau métallique.

11. Dispositif de chambre de combustion (24) selon l'une quelconque des revendications précédentes, **caractérisé en ce qu'**au moins l'un des éléments (34, 40) est fabriqué en un matériau céramique.

12. Dispositif de chambre de combustion (24) selon l'une quelconque des revendications précédentes, **caractérisé en ce que** le premier élément (34) et le second élément (40) peuvent être traversés dans des sens au moins approximativement parallèles.

13. Dispositif de chambre de combustion (24) selon l'une quelconque des revendications précédentes, **caractérisé en ce que** la chambre de combustion (26) présente un axe de chambre de combustion (30) central, et en particulier **en ce que** le premier élément (34) et le second élément (40) sont disposés l'un derrière l'autre vu le long de l'axe de chambre de combustion (30), et en particulier **en ce qu'**au moins l'un des éléments (34, 40) présente différentes épaisseurs d'élément (82) dans des sens parallèles à l'axe de chambre de combustion (30), et en particulier **en ce qu'**au moins l'un des éléments (34, 40) présente une répartition d'épaisseur d'élément symétrique à l'axe de chambre de combustion (30), et en particulier **en ce qu'**au moins l'un des éléments (34, 40) présente une section centrale par rapport à l'axe de chambre de combustion (30) et une section (80) décentralisée par rapport à l'axe de chambre de combustion (30), sachant qu'une épaisseur d'élément (82) de la section décentralisée (80) est supérieure à une épaisseur d'élément (78) de la section centrale (76).

14. Turbine (22) avec un dispositif de chambre de combustion (24) selon l'une quelconque des revendications précédentes.

15. Dispositif de chauffage avec un dispositif de chambre de combustion (24) selon l'une quelconque des revendications 1 à 13.
